# EUROPÄISCHE PATENTSCHRIFT

(11) **EP 3 615 172 B1**
(45) Veröffentlichungstag und Bekanntmachung des Hinweises auf die Patenterteilung: **19.01.2022**
(21) Anmeldenummer: 18716176.5
(22) Anmeldetag: 29.03.2018
(51) Int. Cl.: B01D 35/027, B01D 35/147, B01D 29/23

(54) **FILTERVORRICHTUNG**
FILTER DEVICE
DISPOSITIF DE FILTRATION

(30) Priorität: 27.04.2017 DE 102017004174
(43) Veröffentlichungstag der Anmeldung: 04.03.2020
(73) Patentinhaber: RT-Filtertechnik Gmbh, 88048 Friedrichshafen (DE)
(72) Erfinder: BAUTZ, Marco, 75015 Bretten-Dürrenbüchig (DE)
(74) Vertreter: Bartels und Partner, Patentanwälte
(86) Internationale Anmeldenummer: PCT/EP2018/058055
(87) Internationale Veröffentlichungsnummer: WO 2018/197149

(56) Entgegenhaltungen:
- EP-A1- 3 124 092
- WO-A1-2016/060991
- DE-A1-102013 014 453
- DE-A1-102015 005 136
- US-A1- 2012 205 300

## Beschreibung

Die Erfindung betrifft eine Filtervorrichtung mit den Merkmalen im Oberbegriff von Anspruch 1.

Filtervorrichtungen sind, wie beispielhaft in DE 10 2007 014 813 A1 gezeigt, Stand der Technik und kommen in einer Vielzahl von Bauweisen und Ausgestaltungen für die Filterung von Verfahrensflüssigkeiten, Druckflüssigkeiten, wie Hydrauliköle, flüssige Kraft- und Schmierstoffe, zur Aufbereitung flüssiger Medien und dergleichen zum Einsatz. Die Betriebssicherheit solcher Filtervorrichtungen hängt in ganz starkem Maße davon ab, dass die jeweils eingebauten oder bei nach bestimmten Betriebsphasen erfolgenden Austauschvorgängen neu eingesetzten Filterelemente genau den vorgegebenen Spezifikationen, wie Filterfeinheit, Filterfläche und anderen Parametern entsprechen. Eine Fehlbestückung der betreffenden Filtervorrichtung mit einem ungeeigneten Filterelement und eine dadurch verminderte oder gar fehlende Leistungsfähigkeit, durch die es zu Betriebsstörungen oder gar zu Schäden kommen kann, führt insbesondere bei teuren technischen Anlagen zu erheblichen wirtschaftlichen Einbußen.

Die WO 2016/060991 A1 beschreibt eine Filtervorrichtung mit den Merkmalen im Oberbegriff von Anspruch 1 mit einem abnehmbaren Abschlussteil und mit einer Umhausung, die ein austauschbares Filterelement aufnimmt, das zwei Endkappen aufweist, zwischen denen sich ein Filtermaterial erstreckt, wobei zwischen Abschlussteil und der einen Endkappe eine Positioniereinrichtung angeordnet ist, die in Zusammenwirkung mit zumindest einem korrespondierenden Positionierelement dieser Endkappe das Filterelement, zumindest in seiner Umfangsrichtung gesehen, innerhalb der Umhausung positioniert.

Weitere Filtervorrichtungen gehen aus der DE 10 2013 014 453 A1, der DE 10 2015 005 136 A1, der EP 3 124 092 A1 und der US 2012/0205300 A1 hervor.

Im Hinblick auf diese Problematik liegt der Erfindung die Aufgabe zugrunde, eine Filtervorrichtung zur Verfügung zu stellen, die sich durch eine verbesserte Betriebssicherheit auszeichnet.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass die Positioniereinrichtung einen kranzförmigen Körper bildet, der fußseitig einen Einsatzring aufweist und kopfseitig einen Kopfring trägt, der zumindest teilweise in Anlage mit Anlageteilen des abnehmbaren Abschlussteils ist; dass die Positioniereinrichtung einen Führungssteg aufweist, der in einen als Positionierelement in der einen Endkappe angeordneten Führungskanal eingreift, der zum Inneren des Filterelements hin geöffnet ist; dass die eine Endkappe auf ihrer Innenseite einen Führungsring aufweist, der beidseitig über einen Anlagering vorsteht, an dem das Filtermaterial mit seinem einen freien, stirnseitigen Ende festgelegt ist; und dass sich der Führungskanal, außenumfangsseitig an dem Führungsring festgelegt, über dessen gesamte Höhe erstreckt.

Durch den so gebildeten Nut-Feder-Eingriff zwischen Positioniereinrichtung und Endkappe ist eine Art Schlüssel-Schloss-System gebildet, durch das sichergestellt ist, dass das Filterelement nur bei geometrischer Übereinstimmung von Positioniereinrichtung und Endkappe in die Funktionsposition gelangen kann.

Es ist ferner vorgesehen, dass zwischen Abschlussteil und der einen Endkappe eine Positioniereinrichtung angeordnet ist, die in Zusammenwirkung mit zumindest einem korrespondierenden Positionierelement dieser Endkappe das Filterelement, zumindest in seiner Umfangsrichtung gesehen, innerhalb der Umhausung positioniert. Dadurch, dass dergestalt die Positionierung und damit das Herstellen der Funktionsposition des Filterelements vom Vorhandensein des zur Positionierung passenden Positionierelements an der einen Endkappe abhängig ist, bildet die Positioniereinrichtung einen sog. Verbauschutz, der sicherstellt, dass die Filtervorrichtung nur mit einem Filterelement betreibbar ist, das speziell für den jeweiligen Einsatzzweck geeignet und vorgesehen ist.

Bei vorteilhaften Ausführungsbeispielen weist das Filtergehäuse zumindest einen Gehäusekopf auf, an dem die Umhausung festgelegt ist, wobei die Positioniereinrichtung zwischen der einen Endkappe und einem das Abschlussteil bildenden Gehäusedeckel des Gehäusekopfs angeordnet ist.

Bei Ausführungsbeispielen, bei denen die Umhausung an einem Ringkörper festgelegt ist, der über einen Tragring an einem Wandteil eines Fluid bevorratenden Tanks angebracht ist, kann die Positioniereinrichtung zwischen der einen Endkappe und einem das Abschlussteil bildenden Tankdeckel angeordnet sein.

Bei besonders vorteilhaften Ausführungsbeispielen weist der Führungsring eine nach innen in Richtung des Inneren des Filterelements vorspringende Begrenzungsfläche auf, die mit mindestens einem stufenförmigen Begrenzungsabsatz an einem Einsatzring der Positioniereinrichtung zusammenwirkt, der im Betriebszustand in den Führungsring vonseiten des Filterkopfes her, vorzugsweise bündig, eingreift, wobei zwischen der Begrenzungsfläche und dem Begrenzungsabsatz ein vorgebbarer axialer Abstand besteht. Während durch den Nut-Feder-Eingriff des Führungssteges der Positioniereinrichtung in den Führungskanal der Endkappe durch die Positioniereinrichtung eine Drehposition des Filterelements vorgegeben ist, erfolgt die axiale Ausrichtung des Filterelements mit einem begrenzten Spiel. Dies bedeutet, dass bei einem Filterelement, das mit seiner anderen Endkappe an der Umhausung festgelegt ist, keine besonderen Anforderungen an die Längentolerierung zu stellen sind.

Mit Vorteil kann die Anordnung so getroffen sein, dass der Führungssteg am Einsatzring angeordnet nach außen in Richtung des Führungskanals vom Einsatzring vorsteht und eine Einbaulänge hat, die kleiner ist als die für den Führungssteg vorgesehene Führungslänge innerhalb des rückspringend in der einen Endkappe vorgesehenen Führungskanals.

Bei besonders vorteilhaften Ausführungsbeispielen ist die Anordnung derart getroffen, dass Rastteile am Kopfring des kranzförmigen Körpers an den Anlageteilen des Gehäusekopfes rastend eingreifen zwecks axialem Festlegen der Positioniereinrichtung am Gehäusekopf. Der Montagevorgang kann dadurch einfach und bequem durchgeführt werden, indem das Gehäuse mit an den Anlageteilen verrasteter Positioniereinrichtung geschlossen wird.

Mit Vorteil kann die Anordnung so getroffen sein, dass zwischen Kopfring und Anlageteilen am Gehäusedeckel oder am Tankdeckel mindestens eine Befestigungsschraube vorgesehen ist. Bei mittels der Verschraubung sicher festgelegter Positioniereinrichtung gestaltet sich der Montagevorgang besonders sicher und bequem.

Vorzugsweise erstrecken sich zwischen Einsatzring und Kopfring mehrere, vorzugsweise drei, Distanzstege, von denen mindestens einer an seiner Außenseite vorstehend den Führungssteg trägt.

Bei besonders vorteilhaften Ausführungsbeispielen trägt die eine Endkappe, konzentrisch zu ihrem Führungsring angeordnet, einen Außenring für die Aufnahme eines Abdichtringes, wobei ein weiterer Abdichtring zwischen dem Kopfring der Positioniereinrichtung und den Anlageteilen des Gehäusedeckels angeordnet ist.

Mit Vorteil kann der Außenumfang des Filterelements mit der zugehörigen einen Endkappe kreiszylindrisch ausgebildet sein, und der Innenumfang der inneren Komponenten, wie des Filtermaterials, kann ein Reuleaux-Dreieck bilden. Ein derartig gestaltetes Filtermaterial lässt sich in einem gegebenen Einbauraum mit einer größeren Filterfläche unterbringen, als dies bei einem Filterelement mit einem Filtermaterial mit kreiszylindrischer Querschnittsform möglich wäre.

Bei einem einen Hohlkörper bildenden Filtermaterial ist die Anordnung mit Vorteil so getroffen, dass eine Verbindungslängsnaht des vorzugsweise plissierten Filtermaterials in auf den Führungskanal in der einen Endkappe ausgerichteter Lage endet.

Die Filtervorrichtung kann, wie üblich, eine Bypasseinrichtung aufweisen, die an der anderen Endkappe des Filterelements vorgesehen ist und die auf die Unfiltratseite im Inneren des Filterelements ausmündet.

Unter Bildung eines Filtratraums kann dabei das Filterelement mit einem vorgebbaren radialen Abstand in der Umhausung aufgenommen sein, die zumindest in einem der Bypasseinrichtung benachbarten axialen Längenbereich perforiert sein kann. Dadurch eignet sich die Filtervorrichtung für einen Einbau in einen betreffenden Fluidvorratstank.

Die andere, mit der Bypasseinrichtung versehene Endkappe kann unter Bildung einer Festlegestelle mit der Umhausung fest verbunden sein, wobei die eine Endkappe unter Bildung einer in axialer Richtung wirkenden Loslagerstelle am Gehäusekopf festgelegt ist.

Mit besonderem Vorteil kann am Umfangsbereich einer der Endkappen ein Tag angeordnet sein, das mittels eines RFID-Sensors auslesbar ist, der sich an einem die betreffende Endkappe umgebenden Wandteil befindet. Bekanntermaßen handelt es sich bei Tags um einen Datenspeicher enthaltende, passive Transponder, deren Daten von einem dem Stand der Technik entsprechenden, mit Radiowellen arbeitenden RFID-Sensor auslesbar sind. Bei der bei der Erfindung vorgesehenen Anordnung des Tags am Umfangsbereich einer Endkappe und des Lesegeräts an einem umgebenden Wandteil lässt sich der Abstand zwischen dem Datenspeicher und dem Lesegerät minimieren, wodurch eine sichere Datenübertragung auch mit geringer elektrischer Leistung möglich ist. In dem Datenspeicher können das Filterelement spezifizierende Daten gespeichert sein. Beispielsweise kann es sich um Daten handeln, die eine Identifikation nur des Chips des Filterelements ermöglichen, beispielsweise hinsichtlich dessen Filtermaterials, der zu filtrierenden Medien, der Abmessungen, des Herstelldatums und dergleichen. Außerdem können Daten gespeichert werden, die eine Identifizierung des individuellen Filterelements ermöglichen, beispielsweise eine nur einmal vergebene und vorzugsweise fortlaufende Fabrikationsnummer. Soweit es sich dabei um Daten handelt, die bereits bei der Herstellung des Filterelements bestimmt sind, können diese Daten in einem nicht-überschreibbaren und nur-lesbaren Speicherbereich des Datenspeichers gespeichert sein, so dass sie unveränderlich und insbesondere nicht manipulierbar sind. Alternativ oder ergänzend können auch Daten gespeichert sein, die erst nach der Herstellung des Filterelements auftreten.

Bei Ausführungsbeispielen, bei denen die eine Endkappe sich innerhalb des Gehäusekopfes der Vorrichtung befindet, sind vorteilhafterweise der Sensor an der vom Gehäusekopf umgebenen Endkappe und der RFID-Sensor am Gehäusekopf angeordnet. Ist der RFID-Sensor an eine übergeordnete Maschinensteuerung einer hydraulischen Anlage angeschlossen, kann eine Inbetriebnahme derselben erst erfolgen, wenn das zugehörige Filterelement identifiziert ist. Dergestalt ist ausgeschlossen, dass die hydraulische Anlage angefahren oder betrieben werden kann, wenn ein Plagiatprodukt schlechter Qualität eingesetzt ist, was die hydraulische Anlage schädigen kann.

Gemäß dem Patentanspruch 18 ist Gegenstand der Erfindung auch ein Filterelement, insbesondere vorgesehen für eine Filtervorrichtung wie vorstehend beschrieben.

Vorteilhafte Ausgestaltungen und Weiterbildungen des Filterelements sind in den sich anschließenden Unteransprüchen 19 bis 21 angegeben.

Nachstehend wird die Erfindung anhand von in der Zeichnung dargestellten Ausführungsbeispielen im Einzelnen erläutert. Es zeigen:
- Fig. 1: eine vereinfacht und nicht maßstäblich gezeichnete Schnittdarstellung eines Ausführungsbeispiels der erfindungsgemäßen Filtervorrichtung;
- Fig. 2: eine perspektivische Schrägansicht des Filterelements und der Positioniereinrichtung des Ausführungsbeispiels der Filtervorrichtung;
- Fig. 3: eine mit zentraler Schnittebene aufgeschnitten gezeichnete perspektivische Schrägansicht des Filterelements mit der mit diesem in Eingriff befindlichen Positioniereinrichtung;
- Fig. 4: eine vergrößert gezeichnete und mit zentral verlaufender vertikaler Schnittebene aufgeschnittene perspektivische Schrägansicht des Kopfbereichs des Ausführungsbeispiels, wobei die Funktionsposition dargestellt ist;
- Fig. 5: eine mit horizontaler Schnittebene aufgeschnitten gezeichnete perspektivische Schrägansicht des Filterelements und der mit diesem zusammenwirkenden Positioniereinrichtung, mit Blickrichtung von unten;
- Fig. 6: einen Querschnitt des Filterelements der erfindungsgemäßen Vorrichtung;
- Fig. 7: eine vergrößert gezeichnete und mit zentral verlaufender vertikaler Schnittebene aufgeschnittene perspektivische Schrägansicht des Kopfbereichs eines zweiten Ausführungsbeispiels, wobei die Funktionsposition dargestellt ist; und
- Fig. 8: eine in perspektivischer Schrägansicht und mit vertikaler Schnittebene aufgeschnittene Darstellung eines dritten Ausführungsbeispiels der erfindungsgemäßen Filtervorrichtung.

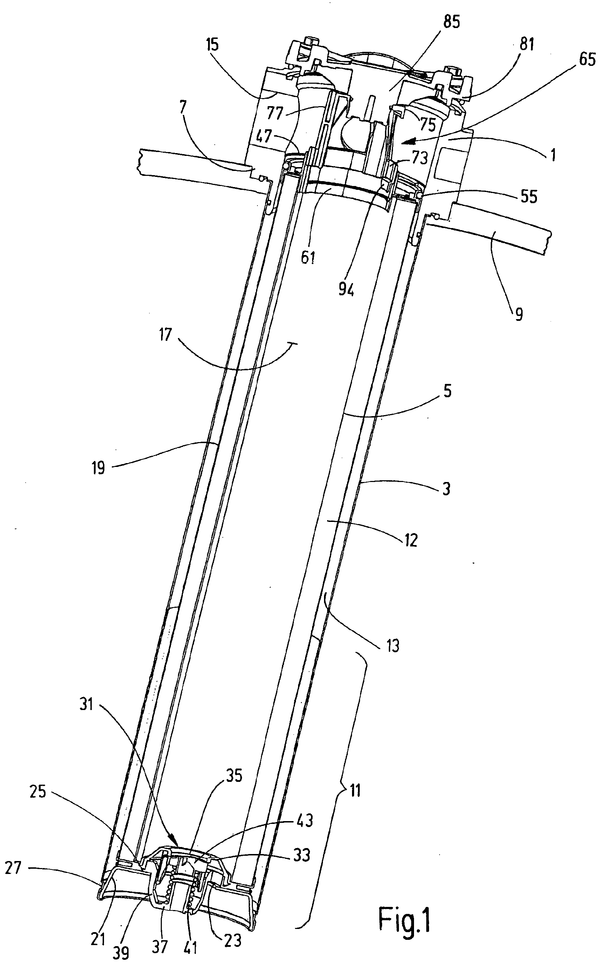

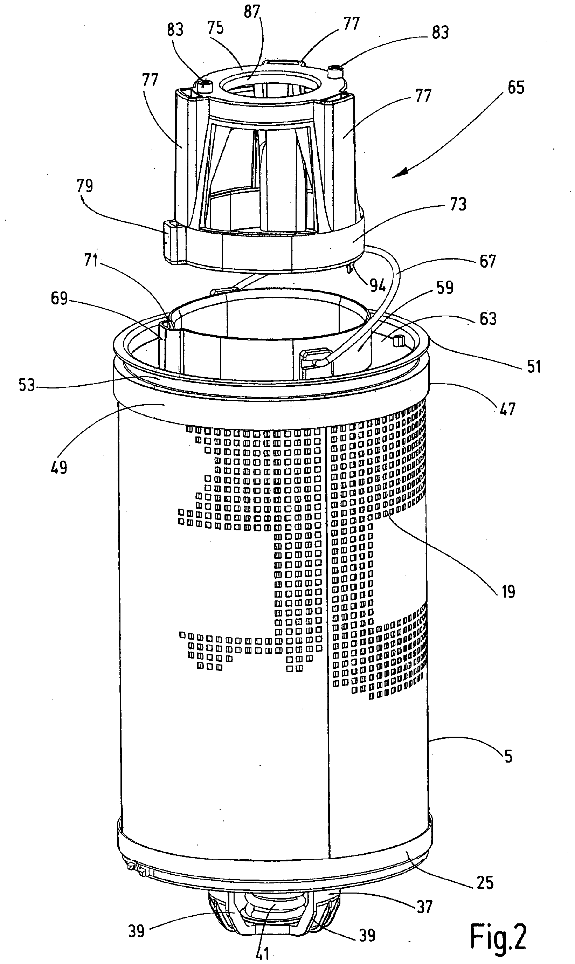

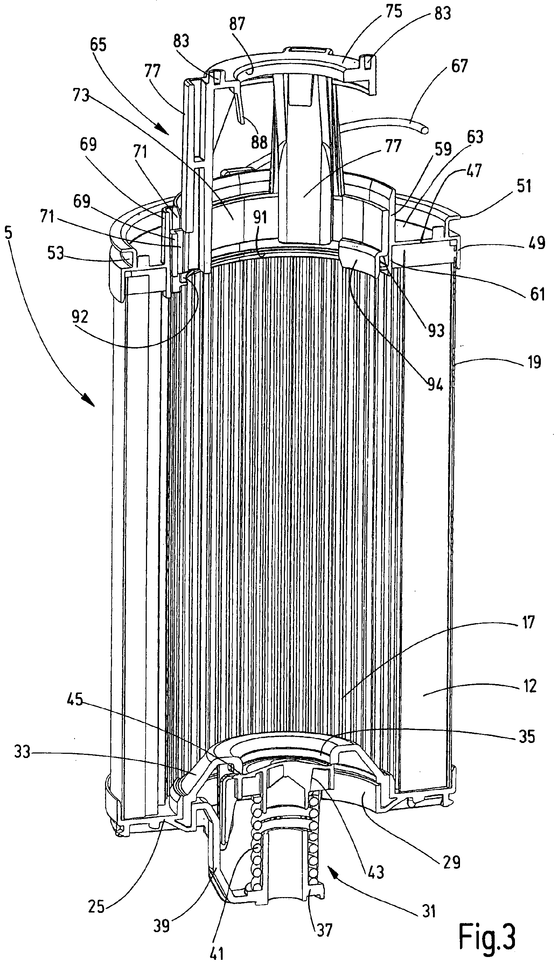

Unter Bezug auf die beigefügten Zeichnungen ist die Erfindung am Beispiel sog. Tankeinbau-Filtervorrichtungen beschrieben. Bei einem ersten Ausführungsbeispiel ist ein Gehäusekopf 1, der zusammen mit einer Umhausung 3 das Filtergehäuse für die Aufnahme eines Filterelements 5 bildet, an einer oberen Öffnung 7 in einem Tank 9 festgelegt, die nur schematisiert angedeutet ist. Der übrige, einen Fluidvorrat aufnehmende Tank ist im Übrigen nicht dargestellt. Wie bei Tankeinbau-Filtervorrichtungen üblich, ist die Umhausung 3 zumindest in einem unteren Längenbereich 11, der sich unterhalb des normalen Flüssigkeitspegels im Tank befindet, mit einer Perforation versehen, über die beim Filtriervorgang Filtrat aus dem Raum 13 austritt, der sich zwischen der Außenseite des Filtermaterials 12 des Filterelements 5 und der Umhausung 3 befindet und beim Filtriervorgang die Reinseite bildet. Der Zustrom des Unfiltrats erfolgt von einem Fluideinlass 15 im Gehäusekopf 1 her zum inneren Filterhohlraum 17, der vom Filtermaterial 12 umgeben ist. Wie den Fig. 2 bis 4 deutlicher entnehmbar ist, ist bei dem das Filtermaterial 12 von innen nach außen durchströmenden Filtriervorgang an der Außenseite des Filtermaterials 12 ein fluiddurchlässiges Stützrohr 19 als Hülle des Filtermaterials 12 angeordnet. Die Umhausung 3 weist, wie Fig. 1 zeigt, am unteren Ende des perforierten Bereichs 11 ein Bodenteil 21 auf, das die Form einer nach unten geöffneten Schale besitzt, in deren Schalenboden sich eine zentral gelegene Öffnung 23 befindet. Die Oberseite des Bodenteils 21 bildet die Aufstandsfläche für eine am unteren Ende des Filtermaterials 12 des Filterelements 5 befindliche Endkappe 25. Am Außenumfang ist das Bodenteil 21 über eine Bördelung 27 mit dem unteren Ende der Umhausung 3 fest verbunden. Wie die Fig. 3 am deutlichsten zeigt, weist die untere Endkappe 25 einen zentral gelegenen inneren, zum Innenraum 17 führenden Durchgang 29 auf, der normalerweise durch ein Bypassventil 31 geschlossen ist. Das Bypassventil 31 weist ein zweiteiliges Ventilgehäuse auf, mit einem oberen Gehäuseteil 33, das sich in Form einer Glocke in den Innenraum 17 erstreckt und am oberen Ende eine zentrale Öffnung 35 aufweist. Während diese Glocke einen Ventilkörper 33 bildet, der mit der Endkappe 25 verclipst ist, ist ein zweiter Ventilkörper 37 mit der Endkappe 25 einstückig ausgebildet und weist einen Kranz von Abständen zwischen sich freilassenden Haltestegen 39 auf, die den Träger für eine Schließfeder 41 des Bypassventils 31 bilden. Diese spannt einen Schließkörper 43 zur dichtenden Anlage an einer Sitzfläche 45 am Rand der Öffnung 35 des Ventilkörpers 33 vor, von der er druckbetätigt abhebbar ist.

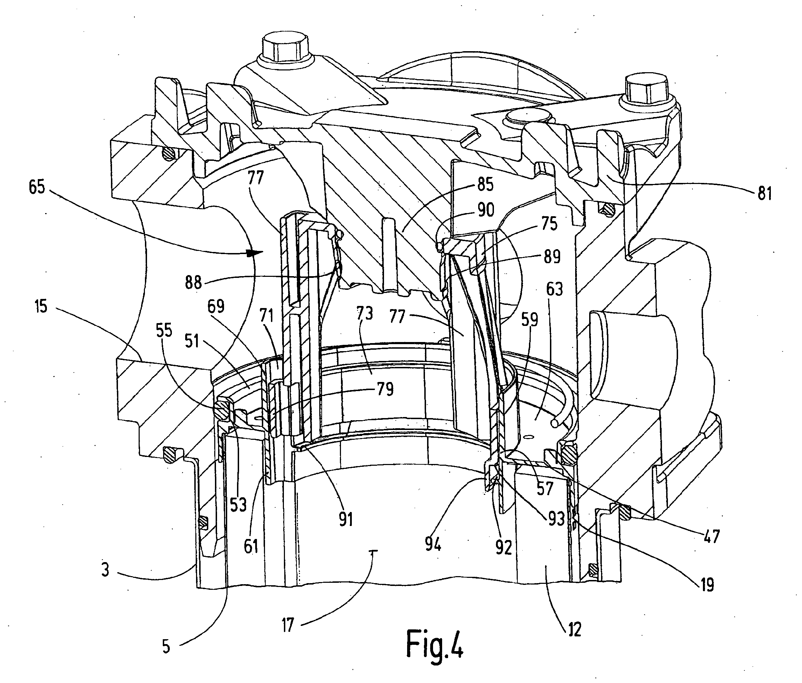

Die die Einfassung für das obere Ende des Filtermaterials 12 bildende Endkappe 47 weist oberhalb ihres Umfangsrandes 49, der die Einfassung für das Filtermaterial 12 und des daran anliegenden Stützrohres 19 bildet, einen nach oben vorstehenden Außenring 51 auf. In diesem befindet sich eine umfängliche, vertiefte Ringnut 53 als Aufnahme für einen Dichtring 55 (Fig. 4). Bei in das Filtergehäuse eingesetztem Filterelement 5, s. Fig. 1 und 4, bildet der Dichtring 55 die Abdichtung gegenüber dem Gehäusekopf 1. Die Endkappe 47 weist einen zentralen Durchgang auf, der von einem Führungsring 57 umgeben ist. Dieser steht mit einem Oberteil 59 und einem Unterteil 61 beidseits von einem Anlagering 63 vor, an dessen Unterseite das Filtermaterial 12 mit seinem zugewandten stirnseitigen Ende festgelegt ist. Der Führungsring 57 mit seinem Oberteil 59 und Unterteil 61 wirkt mit einer in Fig. 2 abgehoben dargestellten Positioniereinrichtung 65 zusammen. Der Führungsring 57, an dessen Oberteil 59, wie Fig. 2 zeigt, ein Griffbügel 67 schwenkbar gelagert ist, weist für die Zusammenwirkung mit der Positioniereinrichtung 65 eine radial nach außen weisende Ausbauchung 69 (Fig. 2, 5 und 6) auf, die einen inneren, axial verlaufenden Führungskanal 71 umgibt.

Die Positioniereinrichtung 65 hat die Form eines einteiligen Kunststoffkörpers mit einem durch einen Einsatzring 73 gebildeten Fußteil und einem zu diesem in paralleler Ebene verlaufenden oberen Kopfring 75. Diese Ringe sind durch drei am Umfang gleichmäßig verteilte Distanzstege 77 miteinander verbunden, deren Länge etwa dem Durchmesser des Einsatzringes 73 entspricht. Als Eingriffsteil, das bei der Funktionsposition (s. Fig. 3 und 4) mit dem Führungskanal 71 an der Endkappe 47 in Eingriff ist, weist der Einsatzring 73 der Positioniereinrichtung 65, in ähnlicher Weise wie das Oberteil 59 des Führungsringes 57 der Endkappe 47, eine Ausbauchung 79 auf, die radial vorsteht und einen sich in Axialrichtung erstreckenden Führungssteg bildet, der bei der Funktionsposition im Führungskanal 71 passend geführt ist. Dabei ist die axiale Länge der Ausbauchung 79 geringer als die im Führungskanal 71 zur Verfügung stehende Führungslänge. Durch den Eingriff der Ausbauchung 79 in den Führungskanal 71 der Endkappe 47 ist das Filterelement 5 drehpositioniert.

Wie am deutlichsten aus Fig. 4 zu ersehen ist, ist die Positioniereinrichtung 65 zwischen Gehäusekopf 1 und der Endkappe 47 des Filterelements 5 eingesetzt. Dabei liegt der Kopfring 75 an Anlageteilen an, die sich an einem das Abschlussteil des Gehäusekopfes 1 bildenden Gehäusedeckel 81 befinden, der mit dem übrigen Teil des Gehäusekopfes 1 abnehmbar verschraubt ist. An der Oberseite des Kopfrings 75 vorstehende, im Abstand voneinander befindliche Eingriffsteile 83 greifen dabei in nicht gezeigte Ausnehmungen im Gehäusedeckel 81 ein, die für die Eingriffsteile 83 ein Radialspiel freilassen. Weitere Anlageteile befinden sich an einem Konuskörper 85, der die zentrale Öffnung 87 des Kopfringes 75 durchgreift. Dabei kommen zungenförmige Rastteile 88, die vom Rand der Öffnung 57 des Kopfrings 75 ausgehen, in Rasteingriff mit einer umfänglichen Rastkerbe 89 am Konuskörper 85. Der Kopfring 75 ist mit einem am Innenumfang der Öffnung 87 sitzenden Dichtring 90 am Konuskörper 85 abgedichtet. Der Kraftschluss zwischen Dichtring 90 und Konuskörper 85 bildet eine weitere Fixierung des Kopfringes 75.

Wie erwähnt und in Fig. 1 gezeigt, ist das Filterelement 5 mit seiner unteren Endkappe 25 über das eine Festlegestelle bildende Bodenteil 21 an der Umhausung 3 gegen eine Axialbewegung nach unten abgestützt. Am oberen Ende des Filterelements 5 ist an der Endkappe 47 ein eine Axialbewegung nach oben zulassendes Loslager über den Dichtring 55 gebildet. Um diese Bewegung auf ein gewünschtes Axialspiel zu begrenzen, ist an der Innenseite des Unterteils 61 des Führungsrings 57 der Endkappe 47 eine radial vorspringende Rippe 91 gebildet, die mit ihrer Oberseite eine Begrenzungsfläche 92 bildet. Diese wirkt als Anschlagfläche mit einem stufenförmigen Begrenzungsabsatz 93 zusammen, der in einem die Rippe 91 übergreifenden, lappenförmigen Fortsatz 94 gebildet ist, der sich vom unteren Rand des Einsatzringes 73 weg nach unten in den Innenraum 17 erstreckt. Der Freiraum zwischen der Rippe 91 und dem Absatz 93 begrenzt das mögliche Axialspiel des Loslagers an der Endkappe 47, das für einen Ausgleich von Längentoleranzen des Filterelements 5 zur Verfügung steht.

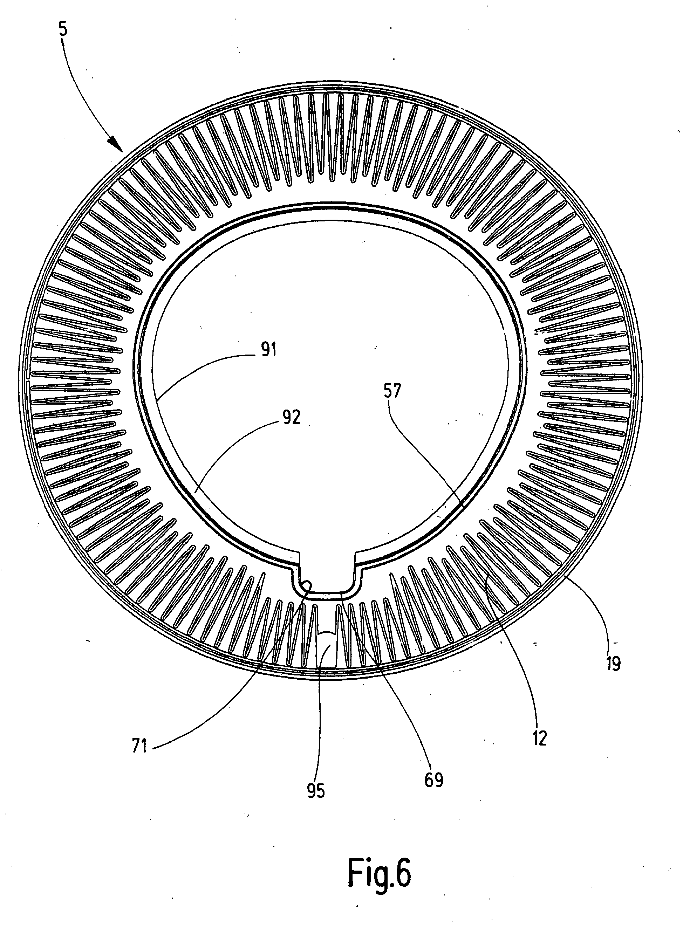

Wie am deutlichsten die Fig. 6 zeigt, ist der vom Stützrohr 19 gebildete Außenumfang des Filterelements 5 kreisrund, während der Innenumfang der inneren Komponenten der Endkappe 47, also der Führungsring 57 mit der an dessen Unterseite 61 befindlichen Rippe 91 mit Begrenzungsfläche 92, die unrunde Form eines Reuleaux-Dreiecks besitzt.

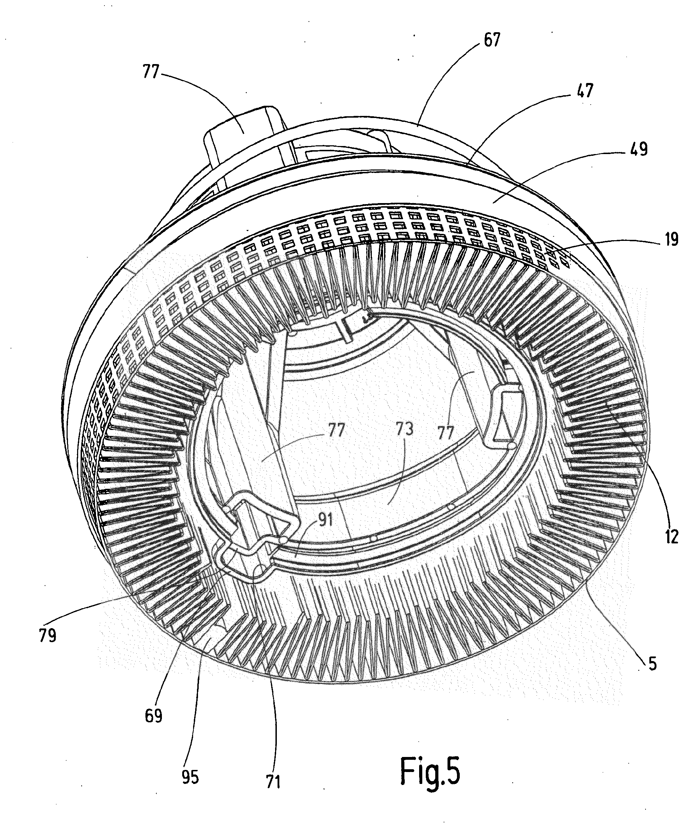

Wie die Fig. 5 und 6 zeigen, ist bei dieser Formgebung die den Führungskanal 71 umgebende Ausbauchung 69 auf das zugeordnete Ende der Verbindungs-Längsnaht 95 ausgerichtet, mit der die Enden der Bahn des plissierten Filtermaterials 12, beispielsweise eines Mesh-Pack, miteinander verbunden sind. Wie die Fig.6 zeigt, ist die Faltenhöhe der Filtermaterialbahn im Bereich der durch Schweißen oder Kleben gebildeten Längsnaht 95 verringert. Anders als bei der oberen Endkappe 47 weisen bei der unteren Endkappe 25 sämtliche Komponenten einen kreiszylindrischen Außen- und Innenumfang auf.

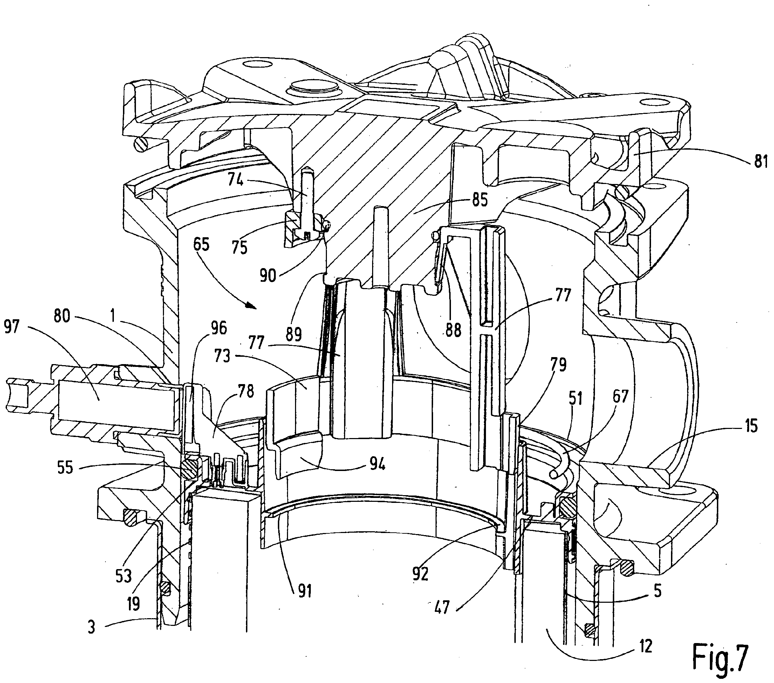

Die Fig. 7 zeigt den Bereich des Gehäusekopfes 1 eines zweiten Ausführungsbeispiels der erfindungsgemäßen Filtervorrichtung. In Fig. 7 ist der das Abschlussteil bildende Gehäusedeckel 81 in vom Gehäusekopf 1 abgehobener Position dargestellt. Abweichend vom ersten Ausführungsbeispiel ist die Positioniereinrichtung 65 mit ihrem Kopfring 75 nicht nur durch den Kraftschluss am Dichtring 90 und den Eingriff der Rastteile 88 in die Rastkerbe 89 des Konuskörpers 85 fixiert, sondern durch mindestens eine Befestigungsschraube 74, die den Kopfring 75 von unten her durchgreift und den Konuskörper 85 an der Oberseite des Kopfringes 75, an der keine vorstehenden Eingriffsteile 83 vorgesehen sind, festlegt und damit die Drehposition der Positioniereinrichtung 65 vorgibt.

Ein weiterer Unterschied zum ersten Ausführungsbeispiel besteht darin, dass an der Oberseite der oberen Endkappe 47 des Filterelements 5 ein Träger 78 für ein einen passiven Transponder bildendes Tag 96 angeformt ist. Im Träger 78 ist das Tag 96 in Form eines flachen Chips in geringem Abstand von der die Endkappe 57 umgebenden Wand des Gehäusekopfes 1, vorzugsweise tauschbar, angeordnet. In der Wand ist eine Sensoröffnung 80 in solcher Position ausgebildet, dass ein in sie eingeschraubter RFID-Sensor 97 auf das Tag 96 ausgerichtet ist, wenn das Filterelement 5 sich in der durch die Positioniereinrichtung 65 vorgegebenen Funktionsposition befindet, in der die im Tag 96 gespeicherten Daten vom Sensor 67 auslesbar sind.

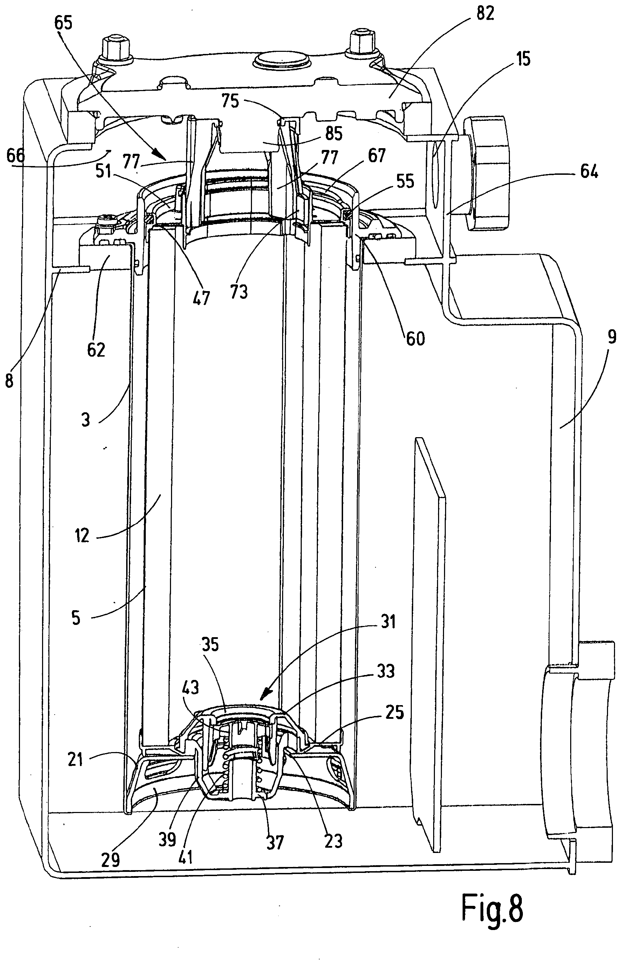

Die Fig. 8 verdeutlicht ein drittes Ausführungsbeispiel, bei dem die obere Endkappe 47 mit dem an ihrem Außenring 51 befindlichen Dichtring 55 bei der Funktionsposition des Filterelements 5 nicht an einem Gehäusekopf 1 abgedichtet ist, sondern an der Innenseite eines Ringkörpers 60, der Bestandteil des zugehörigen Tanks 9 ist. Zusammen mit einem Tragring 62 bildet der Ringkörper 60 auch die Halterung für die Umhausung 3. Der Tragring 62 seinerseits ist von einem Wandteil 8 gehalten, das am oberen Bereich des Tanks 9 eine Zwischenwand bildet, die einen oberen Tankaufsatz 64 vom darunterliegenden Hauptraum des Tanks 9 trennt, in den sich die Umhausung 3 erstreckt. Der Tankaufsatz 64 bildet den Einströmraum 66 für die Zufuhr des Unfiltrats über den am Tankaufsatz 64 befindlichen Fluideinlass 15. Bei Fehlen des Gehäusekopfes 1 mit dem Gehäusedeckel 81 ist bei diesem Ausführungsbeispiel das Abschlussteil, das die Anlageteile für die Positioniereinrichtung 65 bildet, durch einen Tankdeckel 82 gebildet, der an der Oberseite des Tankaufsatzes 64 als Verschlussteil der Einströmkammer 66 abnehmbar anbringbar ist.

## Patentansprüche

1. Filtervorrichtung mit einem abnehmbaren Abschlussteil (81; 82) und mit einer Umhausung (3), die ein austauschbares Filterelement (5) aufnimmt, das zwei Endkappen (25, 47) aufweist, zwischen denen sich ein Filtermaterial (12) erstreckt, wobei zwischen Abschlussteil (81; 82) und der einen Endkappe (47) eine Positioniereinrichtung (65) angeordnet ist, die in Zusammenwirkung mit zumindest einem korrespondierenden Positionierelement (71) dieser Endkappe (47) das Filterelement (5), zumindest in seiner Umfangsrichtung gesehen, innerhalb der Umhausung (3) positioniert,
**dadurch gekennzeichnet,**
**dass** die Positioniereinrichtung (65) einen kranzförmigen Körper bildet, der fußseitig einen Einsatzring (73) aufweist und kopfseitig einen Kopfring (75) trägt, der zumindest teilweise in Anlage mit Anlageteilen (81, 85) des abnehmbaren Abschlussteils (81, 82) ist; dass die Positioniereinrichtung (65) einen Führungssteg (79) aufweist, der in einen als Positionierelement in der einen Endkappe (47) angeordneten Führungskanal (71) eingreift, der zum Inneren (17) des Filterelements (5) hin geöffnet ist;
**dass** die eine Endkappe (47) auf ihrer Innenseite einen Führungsring (57) aufweist, der beidseitig über einen Anlagering (63) vorsteht, an dem das Filtermaterial (12) mit seinem einen freien, stirnseitigen Ende festgelegt ist; und
**dass** sich der Führungskanal (71), außenumfangsseitig an dem Führungsring (57) festgelegt, über dessen gesamte Höhe erstreckt.

2. Filtervorrichtung nach Anspruch 1, **dadurch gekennzeichnet, dass** sie ein Filtergehäuse mit zumindest einem Gehäusekopf (1) aufweist, an dem die Umhausung (3) festgelegt ist, und dass die Positioniereinrichtung (65) zwischen der einen Endkappe (47) und einem das Abschlussteil bildenden Gehäusedeckel (81) des Gehäusekopfs (1) angeordnet ist.

3. Filtervorrichtung nach Anspruch 1 oder 2, **dadurch gekennzeichnet, dass** die Umhausung (3) an einem Ringkörper (60) festgelegt ist, der über einen Tragring (62) an einem Wandteil (8) eines Fluid bevorratenden Tanks (9) angebracht ist, und dass die Positioniereinrichtung (65) zwischen der einen Endkappe (47) und einem das Abschlussteil bildenden Tankdeckel (82) angeordnet ist.

4. Filtervorrichtung nach einem der vorstehenden Ansprüche, **dadurch gekennzeichnet, dass** der Führungsring (57) eine nach innen in Richtung des Inneren des Filterelements (5) vorspringende Begrenzungsfläche (92) aufweist, die mit mindestens einem stufenförmigen Begrenzungsabsatz (93) an einem Einsatzring (73) der Positioniereinrichtung (65) zusammenwirkt, der im Betriebszustand in den Führungsring (57) vonseiten des Filterkopfes (1) her, vorzugsweise bündig, eingreift, und dass zwischen der Begrenzungsfläche (92) und dem Begrenzungsabsatz (93) ein vorgebbarer axialer Abstand besteht.

5. Filtervorrichtung nach Anspruch 4, **dadurch gekennzeichnet, dass** der Führungssteg (79) am Einsatzring (73) angeordnet nach außen in Richtung des Führungskanals (71) vom Einsatzring (73) vorsteht und eine Einbaulänge hat, die kleiner ist als die für den Führungssteg (79) vorgesehene Führungslänge innerhalb des rückspringend in der einen Endkappe (47) vorgesehenen Führungskanals (71).

6. Filtervorrichtung nach einem der vorstehenden Ansprüche, **dadurch gekennzeichnet, dass** die Anlageteile an einem am Gehäusekopf (1) abnehmbar angebrachten Gehäusedeckel (81) ausgebildet sind.

7. Filtervorrichtung nach Anspruch 5 oder 6, **dadurch gekennzeichnet, dass** Rastteile (88) am Kopfring (75) des kranzförmigen Körpers an den Anlageteilen (85) des Gehäusekopfes (1) rastend eingreifen zwecks axialem Festlegen der Positioniereinrichtung (65) am Gehäusekopf (1).

8. Filtervorrichtung nach einem der Ansprüche 6 bis 7, **dadurch**
**gekennzeichnet, dass** zwischen Kopfring (75) und Anlageteilen (85) am Gehäusedeckel (81) oder am Tankdeckel (82) mindestens eine Befestigungsschraube (74) vorgesehen ist.

9. Filtervorrichtung nach einem der vorstehenden Ansprüche, **dadurch gekennzeichnet, dass** zwischen Einsatzring (73) und Kopfring (75) sich mehrere, vorzugsweise drei, Distanzstege (77) erstrecken, von denen mindestens einer an seiner Außenseite vorstehend den Führungssteg (79) trägt.

10. Filtervorrichtung nach einem der Ansprüche 4 bis 9, **dadurch gekennzeichnet, dass** die eine Endkappe (47) konzentrisch zu ihrem Führungsring (57) angeordnet einen Außenring (51) für die Aufnahme eines Abdichtringes (55) trägt und dass ein weiterer Abdichtring (90) zwischen dem Kopfring (75) der Positioniereinrichtung (65) und den Anlageteilen (85) des Gehäusekopfes (1) angeordnet ist.

11. Filtervorrichtung nach einem der vorstehenden Ansprüche, **dadurch gekennzeichnet, dass** der Außenumfang des Filterelements (5) und der zugehörigen einen Endkappe (47) kreiszylindrisch ausgebildet ist und der Innenumfang der inneren Komponenten ein Reuleaux-Dreieck bildet.

12. Filtervorrichtung nach einem der vorstehenden Ansprüche, **dadurch gekennzeichnet, dass** eine Verbindungslängsnaht (95) des, vorzugsweise plissierten, Filtermaterials (12) in auf den Führungskanal (71) in der einen Endkappe (47) ausgerichteten Lage endet.

13. Filtervorrichtung nach einem der vorstehenden Ansprüche, **dadurch gekennzeichnet, dass** die andere Endkappe (25) des Filterelements (5) eine Bypasseinrichtung (31) aufweist, die auf die Unfiltratseite im Inneren (71) des Filterelements (5) ausmündet.

14. Filtervorrichtung nach Anspruch 13, **dadurch gekennzeichnet, dass** unter Bildung eines Filtratraums (13) das Filterelement (5) mit einem vorgebbaren radialen Abstand in der Umhausung (3) aufgenommen ist, die zumindest in einem der Bypasseinrichtung (31) benachbarten axialen Längenbereich (11) perforiert ist.

15. Filtervorrichtung nach einem der Ansprüche 13 oder 14, **dadurch gekennzeichnet, dass** die andere Endkappe (25) mit der Bypasseinrichtung (31) unter Bildung einer Festlegestelle (21) mit der Umhausung (3) fest verbunden ist und dass die eine Endkappe (47) unter Bildung einer in axialer Richtung wirkenden Loslagerstelle (55) in Umfangsrichtung in der Umhausung (3) am Gehäusekopf (1) festgelegt ist.

16. Filtervorrichtung nach einem der vorstehenden Ansprüche, **dadurch gekennzeichnet, dass** am Umfangsbereich einer der Endkappen (47) ein Tag (96) angeordnet ist, das mittels eines RFID-Sensors (97) auslesbar ist, der sich an einem die betreffende Endkappe (47) umgebenden Wandteil befindet.

17. Filtervorrichtung nach Anspruch 16, **dadurch gekennzeichnet, dass** das Tag (96) an der vom Gehäusekopf (1) umgebenen Endkappe (47) und der RFID-Sensor am Gehäusekopf (1) angeordnet sind.

18. Filterelement, insbesondere vorgesehen für eine Filtervorrichtung nach einem der vorstehenden Ansprüche, mit einem Filtermaterial (12), das sich zwischen zwei Endkappen (25, 47) erstreckt,
**dadurch gekennzeichnet,**
**dass** eine der Endkappen (47) einen Führungskanal (71) aufweist, der zum Inneren (17) des Filterelements (5) hin geöffnet ist;
**dass** die eine Endkappe (47) auf ihrer Innenseite einen Führungsring (57) aufweist, der beidseitig über einen Anlagering (63) vorsteht, an dem das Filtermaterial (12) mit seinem einen freien, stirnseitigen Ende festgelegt ist; und
**dass** sich der Führungskanal (71), außenumfangsseitig an dem Führungsring (57) festgelegt, über dessen gesamte Höhe erstreckt.

19. Filterelement nach Anspruch 18, **dadurch gekennzeichnet, dass** der Führungsring (57) eine nach innen in Richtung des Inneren (17) des Filterelements (5) vorspringende Begrenzungsfläche (91, 92) aufweist.

20. Filterelement nach Anspruch 18 oder 19, **dadurch gekennzeichnet, dass** die eine Endkappe (47), konzentrisch zu ihrem Führungsring (57) angeordnet, einen Außenring (51) für die Aufnahme eines Abdichtringes (55) trägt.

21. Filterelement nach einem der Ansprüche 18 bis 20, **dadurch gekennzeichnet, dass** der Außenumfang des Filterelements (5) nebst der zugehörigen einen Endkappe (47) kreiszylindrisch ausgebildet ist und der Innenumfang der dahingehenden Komponenten ein Reuleaux-Dreieck bildet und dass alle Komponenten der anderen Endkappe (25) einen kreiszylindrischen Außen- und Innenumfang begrenzen.

## Claims

1. Filter device with a removable end part (81; 82) and with an enclosure (3) which accommodates a replaceable filter element (5) that comprises two end caps (25, 47), between which a filter material (12) extends, wherein arranged between the end part (81; 82) and the one end cap (47) is a positioning device (65) which, in cooperation with at least one corresponding positioning element (71) of this end cap (47), positions the filter element (5) inside the enclosure (3), at least when viewed in its circumferential direction,
**characterised in that**
the positioning device (65) forms an annular body which, on the bottom side, has an insert ring (73) and, on the top side, bears a head ring (75) which is at least partially in contact with contact parts (81, 85) of the removable end part (81, 82); **in that** the positioning device (65) has a guide bar (79) which engages in a guide channel (71), which is arranged as a positioning element in the one end cap (47), the guide channel being open towards the inside (17) of the filter element (5);
**in that** the one end cap (47) has on its inside a guide ring (57) which protrudes on both sides beyond a contact ring (63) to which the filter material (12) is fixed with its one free face end; and
**in that** the guide channel (71), fixed on the outer circumference to the guide ring (57), extends over the entire height thereof.

2. Filter device according to claim 1, **characterised in that** it comprises a filter housing with at least one housing head (1) to which the enclosure (3) is fixed, and **in that** the positioning device (65) is arranged between the one end cap (47) and a housing cover (81) of the housing head (1) which forms the end part.

3. Filter device according to claim 1 or 2, **characterised in that** the enclosure (3) is fixed to an annular body (60) which is attached via a support ring (62) to a wall part (8) of a fluid-storing tank (9), and **in that** the positioning device (65) is arranged between the one end cap (47) and a tank cover (82) which forms the end part.

4. Filter device according to one of the preceding claims, **characterised in that** the guide ring (57) has a boundary surface (92) protruding inwards towards the inside of the filter element (5) and interacts with at least one stepped boundary shoulder (93) on an insert ring (73) of the positioning device (65), which insert ring, in the operating state, engages in the guide ring (57) from the filter head side (1), preferably in a flush manner, and **in that** a predefinable axial distance exists between the boundary surface (92) and the boundary shoulder (93).

5. Filter device according to claim 4, **characterised in that** the guide bar (79) arranged on the insert ring (73) protrudes outwards from the insert ring (73) towards the guide channel (71) and has an installed length which is shorter than the guide length provided for the guide bar (79) inside the guide channel (71) which is provided recessed in the one end cap (47).

6. Filter device according to one of the preceding claims, **characterised in that** the contact parts are formed on a housing cover (81) which is removably attached to the housing head (1).

7. Filter device according to claim 5 or 6, **characterised in that** latching parts (88) on the head ring (75) of the annular body engage in the contact parts (85) of the housing head (1) in a latching manner for the purpose of axially fixing the positioning device (65) to the housing head (1).

8. Filter device according to one of claims 6 to 7, **characterised in that** at least one fixing screw (74) is provided between the head ring (75) and the contact parts (85) on the housing cover (81) or on the tank cover (82).

9. Filter device according to one of the preceding claims, **characterised in that** a plurality, preferably three, spacer bars (77) extend between the insert ring (73) and the head ring (75), at least one of which, protruding on its outer side, bears the guide bar (79).

10. Filter device according to one of claims 4 to 9, **characterised in that** the one end cap (47) bears an outer ring (51), arranged concentrically to its guide ring (57), for receiving a sealing ring (55), and **in that** a further sealing ring (90) is arranged between the head ring (75) of the positioning device (65) and the contact parts (85) of the housing head (1).

11. Filter device according to one of the preceding claims, **characterised in that** the outer circumference of the filter element (5) and of the associated one end cap (47) is configured to be cylindrical and the inner circumference of the inner components forms a Reuleaux triangle.

12. Filter device according to one of the preceding claims, **characterised in that** a longitudinal connecting seam (95) of the, preferably pleated, filter material (12) terminates in a position aligned with the guide channel (71) in the one end cap (47).

13. Filter device according to one of the preceding claims, **characterised in that** the other end cap (25) of the filter element (5) comprises a bypass device (31) which opens onto the unfiltered medium side inside (71) the filter element (5).

14. Filter device according to claim 13, **characterised in that** the filter element (5) is accommodated with a predefinable radial gap, forming a filtrate chamber (13), in the enclosure (3), the enclosure being perforated at least in an axial length region (11) adjacent to the bypass device (31).

15. Filter device according to one of claims 13 or 14, **characterised in that** the other end cap (25) with the bypass device (31) is firmly connected to the enclosure (3), forming a fixing point (21), and **in that** the one end cap (47) is fixed to the housing head (1) in the enclosure (3) in the circumferential direction, forming a floating bearing position (55) acting in the axial direction.

16. Filter device according to one of the preceding claims, **characterised in that** a tag (96), which can be read by means of an RFID sensor (97), which is located on a wall part surrounding the relevant end cap (47), is arranged on the circumferential region of one of the end caps (47).

17. Filter device according to claim 16, **characterised in that** the tag (96) is arranged on the end cap (47) which is surrounded by the housing head (1) and the RFID sensor is arranged on the housing head (1).

18. Filter element, in particular provided for a filter device according to one of the preceding claims, with a filter material (12) that extends between two end caps (25, 47),
**characterised in that**
one of the end caps (47) has a guide channel (71) which is open towards the inside (17) of the filter element (5);
**in that** the one end cap (47) has on its inside a guide ring (57) which protrudes on both sides beyond a contact ring (63) to which the filter material (12) is fixed with its one free face end; and
**in that** the guide channel (71), fixed on the outer circumference to the guide ring (57), extends over the entire height thereof.

19. Filter element according to claim 18, **characterised in that** the guide ring (57) has a boundary surface (91, 92) protruding inwards towards the inside (17) of the filter element (5).

20. Filter element according to claim 18 or 19, **characterised in that** the one end cap (47) bears an outer ring (51), arranged concentrically to its guide ring (57), for receiving a sealing ring (55).

21. Filter element according to one of claims 18 to 20, **characterised in that** the outer circumference of the filter element (5) together with the associated one end cap (47) is configured to be cylindrical and the inner circumference of the corresponding components forms a Reuleaux triangle and **in that** all components of the other end cap (25) define a cylindrical outer and inner circumference.

## Revendications

1. Installation de filtration comprenant une partie (81 ; 82) de fermeture pouvant être retirée et comprenant une enveloppe (3), qui reçoit un élément (5) de filtre pouvant être remplacé et ayant deux coiffes (25, 47) d'extrémité, entre lesquelles s'étend une matière (12) filtrante, dans laquelle, entre la partie (81 ; 82) de fermeture et l'une des coiffes (47) d'extrémité, est disposé un dispositif (65) de mise en position, qui, en coopération avec au moins un élément (71) correspondant de mise en position de cette coiffe (47) d'extrémité, met l'élément (5) de filtre, au moins considéré dans sa direction de pourtour, en position à l'intérieur de l'enveloppe (3),
**caractérisé**
**en ce que** le dispositif (65) de mise en position forme une pièce en forme de couronne qui a, du côté du pied, un anneau (73) d'insertion et qui porte, du côté de la tête, un anneau (75) de tête, qui est au moins en partie en contact avec des parties (81, 85) de contact de la partie (81 ; 82) de fermeture pouvant être retirée ;
**en ce que** le dispositif (65) de mise en position a une barrette (79) de guidage, qui pénètre dans un canal (71) de guidage, ménagé comme élément de mise en position dans la une coiffe (47) d'extrémité et ouvert vers l'intérieur (17) de l'élément (5) de filtre ;
**en ce que** la une coiffe (47) d'extrémité a, sur sa face intérieure, un anneau (57) de guidage, qui fait saillie des deux côtés par un anneau (63) de contact, sur lequel la matière (12) filtrante est fixée par l'une de ses extrémités libres du côté frontal ; et
**en ce que** le canal (71) de guidage, fixé du côté du pourtour extérieur à l'anneau (57) de guidage, s'étend sur toute la hauteur de celui-ci.

2. Installation de filtration suivant la revendication 1, **caractérisée en ce qu'**elle a un boîtier de filtre ayant au moins une tête (1) de boîtier, à laquelle est fixée l'enveloppe (3), et **en ce que** le dispositif (65) de mise en position est disposé entre la une coiffe (47) d'extrémité et un couvercle (81), formant la partie de fermeture, de la tête (1) du boîtier.

3. Installation de filtration suivant la revendication 1 ou 2, **caractérisée en ce que** l'enveloppe (3) est fixée à une pièce (60) annulaire, qui est appliquée par un anneau (62) de support à une partie (8) de paroi d'un réservoir (9) de mise en réserve de fluide, et **en ce que** le dispositif (65) de mise en position est disposé entre la une coiffe (47) d'extrémité et un couvercle (82) du réservoir formant la partie de fermeture.

4. Installation de filtration suivant l'une des revendications précédentes, **caractérisée en ce que** l'anneau (57) de guidage a une surface (92) de démarcation en saillie vers l'intérieur dans la direction de l'intérieur de l'élément (5) de filtre et coopérant avec au moins un ressaut (93) de démarcation en forme de gradin sur un anneau (73) d'insertion du dispositif (65) de mise en position, qui dans l'état de fonctionnement pénètre, de préférence à affleurement, dans l'anneau (57) de guidage du côté de la tête (1) du filtre et **en ce qu'**il y a une distance axiale pouvant être donnée à l'avance entre la surface (92) de démarcation et le ressaut (93) de démarcation.

5. Installation de filtration suivant la revendication 4, **caractérisée en ce que** la barrette (79) de guidage de l'anneau (73) d'insertion, disposée vers l'extérieur, fait saillie dans la direction du canal (71) de guidage de l'anneau (73) d'insertion et a une longueur d'insertion, qui est plus petite que la longueur de guidage prévue pour la barrette (79) de guidage à l'intérieur du canal (71) de guidage retournant prévu dans la une coiffe (47) d'extrémité.

6. Installation de filtration suivant l'une des revendications précédentes, **caractérisée** en ce les parties de contact sont constituées sur un couvercle (81) du boîtier mis de manière à pouvoir être retiré sur la tête (1) du boîtier.

7. Installation de filtration suivant la revendication 5 ou 6, **caractérisée en ce que** des parties (88) d'encliquetage de l'anneau (75) de tête de la pièce en forme de couronne pénètrent en s'encliquetant sur les parties (85) de contact de la tête (1) du boîtier en vue d'une fixation axiale du dispositif (65) de mise en position sur la tête (1) du boîtier.

8. Installation de filtration suivant l'une des revendications 6 à 7, **caractérisée en ce qu'**il est prévu au moins une vis (74) de fixation entre l'anneau (75) de tête et des parties (85) de contact du couvercle (81) du boîtier ou du couvercle (82) du réservoir.

9. Installation de filtration suivant l'une des revendications précédentes, **caractérisée en ce qu'**entre l'anneau (73) d'insertion et l'anneau (75) de tête s'étendent plusieurs, de préférence trois, entretoises (77), dont l'une au moins porte en saillie sur sa face extérieure, la barrette (79) de guidage.

10. Installation de filtration suivant l'une des revendications 4 à 9, **caractérisée en ce que** la une coiffe (47) d'extrémité porte, disposé concentriquement à son anneau (57) de guidage, un anneau (51) extérieur de réception d'une bague (55) d'étanchéité et **en ce qu'**une autre bague (90) d'étanchéité est disposée entre l'anneau (75) de tête du dispositif (65) de mise en position et les parties (85) de contact de la tête (1) du boîtier.

11. Installation de filtration suivant l'une des revendications précédentes, **caractérisée en ce que** le pourtour extérieur de l'élément (5) de filtre et la une coiffe (47) d'extrémité associée sont constitués sous la forme d'un cylindre de section transversale circulaire et le pourtour intérieur des composants intérieurs forment un triangle de Reuleaux.

12. Installation de filtration suivant l'une des revendications précédentes, **caractérisée en ce qu'**un cordon (95) longitudinal de liaison de la matière (12) filtrante, de préférence plissée, se termine en une position dirigée sur le canal (71) de guidage dans la une coiffe (47) d'extrémité.

13. Installation de filtration suivant l'une des revendications précédentes, **caractérisée en ce que** l'autre coiffe (25) d'extrémité de l'élément (5) de filtre a un dispositif (31) de dérivation, qui débouche sur le côté du non filtrat à l'intérieur (71) de l'élément (5) de filtre.

14. Installation de filtration suivant la revendication 13, **caractérisée en ce que**, en formant un espace (13) pour le filtrat, l'élément (5) de filtre est reçu à une distance radiale pouvant être donnée à l'avance dans l'enveloppe (3), qui est perforée au moins dans une partie (11) longitudinale axiale voisine du dispositif (31) de dérivation.

15. Installation de filtration suivant l'une des revendications 13 ou 14, **caractérisée en ce que** l'autre coiffe (25) d'extrémité ayant le dispositif (31) de dérivation est reliée fixement à l'enveloppe (3) en formant un point (21) de fixation et **en ce que** la une coiffe (47) d'extrémité est fixée à la tête (1) du boîtier, dans la direction du pourtour de l'enveloppe (3), en formant un point (55) de palier libre, agissant dans la direction axiale.

16. Installation de filtration suivant l'une des revendications précédentes, **caractérisée en ce que**, sur la partie du pourtour de l'une des coiffes (47) d'extrémité est disposée une étiquette (96), qui peut être lue au moyen d'un capteur (97) RFID, qui se trouve sur une partie de paroi entourant la coiffe (47) d'extrémité concernée.

17. Installation de filtration suivant la revendication 16, **caractérisée en ce que** l'étiquette (96) est disposée sur la coiffe (47) d'extrémité entourant la tête (1) du boîtier et le capteur RFID est disposé sur la tête (1) du boîtier.

18. Elément de filtre, prévu notamment pour une installation de filtration suivant l'une des revendications précédentes, comprenant une matière (12) filtrante, qui s'étend entre deux coiffes (25, 47) d'extrémité,
**caractérisé**
**en ce que** l'une des coiffes (47) d'extrémité a un canal (71) de guidage, qui est ouvert vers l'intérieur (17) de l'élément (5) de filtre ;
**en ce que** la une coiffe (47) d'extrémité a, sur sa face intérieure, un anneau (57) de guidage, qui fait saillie des deux côtés par un anneau (63) de contact, sur lequel la matière (12) filtrante est fixée par l'une de ses extrémités libres du côté frontal ; et
**en ce que** le canal (71) de guidage, fixé du côté du pourtour extérieur à l'anneau (57) de guidage, s'étend sur toute la hauteur de celui-ci.

19. Elément de filtre suivant la revendication 18, **caractérisé en ce que** l'anneau (57) de guidage a une surface (91, 92) de démarcation faisant saillie vers l'intérieur en direction de l'intérieur (17) de l'élément (5) de filtre.

20. Elément de filtre suivant la revendication 18 ou 19, **caractérisé en ce que** la une coiffe (47) d'extrémité, disposée concentriquement à son anneau (57) de guidage, porte un anneau (51) extérieur de réception d'une bague (55) d'étanchéité.

21. Elément de filtre suivant l'une des revendications 18 à 20, **caractérisé en ce que** le pourtour extérieur de l'élément (5) de filtre est, conjointement avec la une coiffe (47) d'extrémité associée, constitué sous la forme d'un cylindre de section circulaire et le pourtour intérieur des composants en question forment un triangle de Releaux et **en ce que** tous les composants de l'autre coiffe (25) d'extrémité délimitent un pourtour extérieur et intérieur cylindrique de section transversale circulaire.
